# FASCICULE DE BREVET EUROPEEN

(11) **EP 2 188 974 B1**
(45) Date de publication et mention de la délivrance du brevet: **25.04.2018**
(21) Numéro de dépôt: 08803677.7
(22) Date de dépôt: 04.09.2008
(51) Int. Cl.: H04L 29/06

(54) **ROUTEUR ACARS POUR APPLICATIONS AVIONIQUES DISTANTES**
ACARS-ROUTER FÜR FERNGESTEUERTE LUFTFAHRTELEKTRONIK
ACARS ROUTER FOR REMOTE AVIONICS APPLICATIONS

(30) Priorité: 13.09.2007 FR 0757547
(43) Date de publication de la demande: 26.05.2010
(73) Titulaire: AIRBUS OPERATIONS, 31060 Toulouse (FR)
(72) Inventeur: TAMALET, Stéphane, F-31470 Fonsorbes (FR); GOBBO, Gilles, F-31140 Aucamville (FR); DURAND, Frédéric, F-31300 Tolouse (FR); DEVILLE, Jean-Georges, F-31500 Tolouse (FR)
(74) Mandataire: Ilgart, Jean-Christophe
(86) Numéro de dépôt international: PCT/EP2008/061707
(87) Numéro de publication internationale: WO 2009/034011

(56) Documents cités:
- US-A1- 2005 286 452
- US-A1- 2006 036 773
- CONDOR ENGINEE: "AFDX Protocol Tutorial (Version 3.0)", INTERNET CITATION, 1 May 2005 (2005-05-01), page 55pp, XP007912659, Retrieved from the Internet: URL:www.acalmicrosystems.co.uk/whitepapers /sbs8.pdf [retrieved on 2010-04-15]
- Unknown: "Application Note ICS-200-01 Introduction to ACARS Messaging Services", , 17 April 2006 (2006-04-17), XP055423063, Retrieved from the Internet: URL:https://www.icao.int/safety/acp/inacti ve%20working%20groups%20library/acp-wg-m-i ridium-7/ird-swg07-wp08%20-%20acars%20app% 20note.pdf [retrieved on 2017-11-09]

## Description

### DOMAINE TECHNIQUE

La présente invention concerne de manière générale le domaine des télécommunications aéronautiques et plus particulièrement celui du routage ACARS (*Aircraft Communication and Reporting System*)*.*

### ÉTAT DE LA TECHNIQUE ANTÉRIEURE

Dans le domaine aéronautique, le système ACARS permet de transmettre des données entre un aéronef et une station au sol, notamment d'échanger des informations de type AOC (*Aeronautical Operational Control*) avec les opérateurs de compagnies aériennes ou des informations de type ATC (*Air Traffic Control*) avec les contrôleurs aériens.

Le système ACARS peut utiliser plusieurs supports de transmission (appelés aussi média dans l'état de la technique), ou plus exactement plusieurs types de sous-réseau pour transmettre les données entre l'aéronef et le sol, à savoir des sous-réseaux HF, VHF ou SATCOM. Le sous-réseau de télécommunication VHF permet des liaisons point à point en ligne de visée directe avec des émetteurs/récepteurs au sol mais avec une portée relativement réduite. Le sous-réseau de télécommunication satellitaire SATCOM fournit par contre une couverture mondiale, à l'exception des zones polaires, mais avec des coûts de communication élevés. Le sous-réseau HF permet quant à lui de couvrir les zones polaires. La liaison de données entre bord et sol est couramment désignée par le terme générique de « datalink » dans l'état de la technique.

Généralement, la transmission de données vers le sol se fait au moyen d'un routeur ACARS. Ce routeur se présente sous la forme d'un équipement de gestion des communication ou CMU (*Communications Management Unit*) qui sélectionne automatiquement le support de transmission (VHF, HF, SATCOM) le mieux approprié en fonction d'un certain nombre de paramètres, notamment la disponibilité du média et son coût d'utilisation.

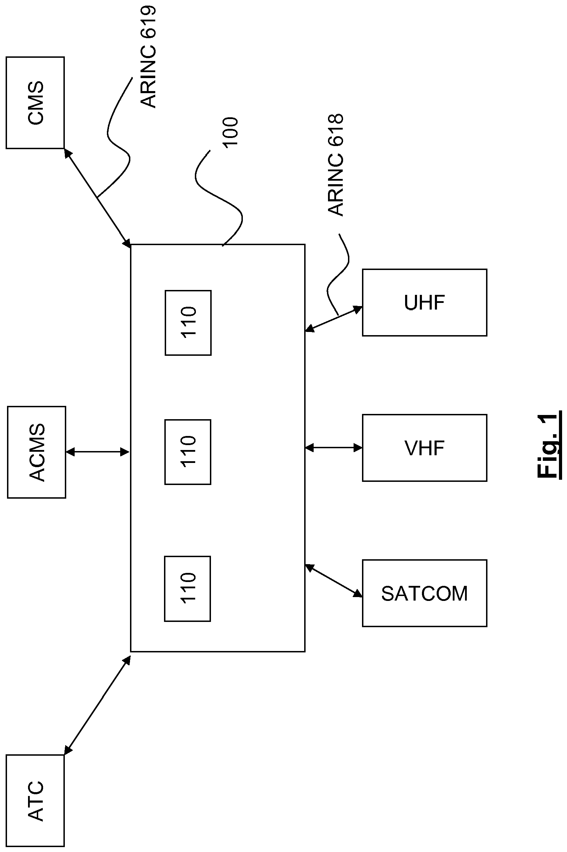

La Fig. 1 illustre schématiquement l'architecture d'un système de communication utilisant un routeur ACARS conventionnel, 100. Un tel routeur peut héberger une ou plusieurs applications, 110, susceptibles de transmettre et de recevoir des données avec le sol sous forme de messages ACARS. Ces applications sont prédéfinies lors de la construction de l'équipement. L'ajout d'une nouvelle application nécessite une mise à jour du routeur (voire son remplacement) ainsi qu'une nouvelle certification. L'installation d'une nouvelle application au sein du routeur est par conséquent une opération très lourde. Le routeur ACARS peut également être relié à des applications avioniques distantes au moyen de liaisons point à point dédiées de type Arinc 429. Le protocole de transmission des messages ACARS sur ces liaisons est défini dans la norme Arinc 619.

Les applications avioniques distantes peuvent se situer dans différents type de LRUs (*Line Replaceable Unit*), par exemple un module ACMS (*Aircraft Condition Monitoring System*) pour la transmission à la compagnie aérienne d'informations relatives à l'état de l'avion, un module ATC pour la réception d'informations de contrôle aérien, un module CMS (*Centralised Maintenance System*) pour l'échange de données de maintenance. Ces applications dialoguent avec le routeur au moyen d'interfaces dédiées prévues lors de la conception du routeur. Autrement dit, il n'est pas envisageable qu'une application supplémentaire puisse utiliser le service ACARS offert par le routeur. Cela supposerait, à tout le moins, la mise en place d'une nouvelle interface et par conséquent une nouvelle opération de certification.

Comme on vient de le voir, les routeurs ACARS conventionnels n'autorisent pas d'architecture évolutive. Toute nouvelle application avionique faisant appel au service ACARS nécessite une nouvelle reconfiguration et donc une nouvelle certification du routeur.

Le but de la présente invention est de proposer un routeur ACARS permettant une architecture de communication évolutive, pouvant être facilement customisée selon les besoins des différentes compagnies aériennes.

L'état de la technique antérieure est décrit dans le document US-2005/286452. Ce document décrit une méthode et système pour la communication entre un réseau embarqué dans un aéronef et le sol.

### BRÈVE DESCRIPTION DES DESSINS

D'autres caractéristiques et avantages de l'invention apparaîtront à la lecture d'un mode de réalisation préférentiel de l'invention en référence aux figures jointes parmi lesquelles :
La Fig. 1 représente schématiquement l'architecture d'un système de communication embarqué utilisant un routeur ACARS, connu de l'état de la technique ;
La Fig. 2 représente schématiquement l'architecture d'un système de communication embarqué utilisant un routeur ACARS, selon un mode de réalisation de l'invention ;
La Fig. 3 représente schématiquement les piles de protocole mises en oeuvre dans le système de la Fig. 2 ;
La Fig. 4 représente schématiquement une première fonctionnalité de la couche de protocole APOTA de la Fig. 3 ;
La Fig. 5 représente schématiquement une procédure d'enregistrement dynamique d'une application distante au routeur, dans le système de communication selon l'invention.

### EXPOSÉ DÉTAILLÉ DE MODES DE RÉALISATION PARTICULIERS

On supposera dans la suite que l'aéronef est équipé d'un réseau AFDX (*Avionics Full DupleX*). On rappelle que le réseau AFDX, développé pour les besoins de l'aéronautique est basé sur un réseau Ethernet commuté et qu'il a fait l'objet d'une standardisation dans la norme Arinc 664, partie 7. On trouvera notamment une description détaillée de ce réseau dans le document intitulé « AFDX protocol tutorial » disponible sous l'URL :
http://sierrasales.com/pdfs/AFDXTutorial.pdf.

L'idée à la base de l'invention est de prévoir un protocole permettant à toute application installée dans un équipement terminal (*End System*) relié au réseau AFDX de s'enregistrer dynamiquement auprès du routeur pour utiliser le service de communication ACARS. Le protocole en question étend de fait l'accès au service de communication ACARS à toute application distante préalablement enregistrée, comme si elle était hébergée au sein du routeur ou comme si l'équipement embarqué utilisait un protocole Arinc 619 sur une liaison dédiée Arinc 429 avec le routeur.

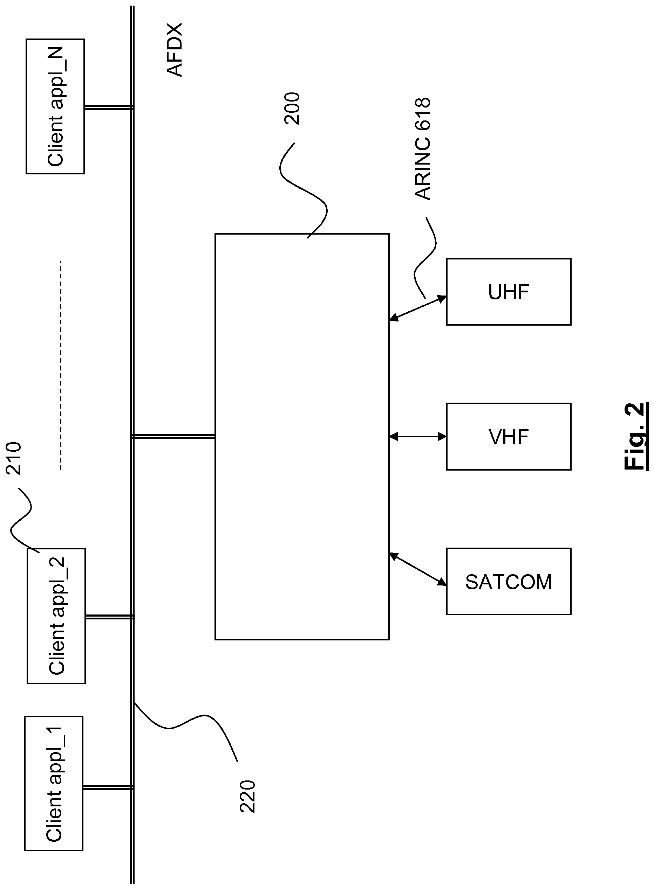

La Fig. 2 représente un système de communication embarqué utilisant un routeur ACARS, 200, selon un mode de réalisation de l'invention. Le routeur 200 ainsi qu'un ou plusieurs équipement(s) 210, hébergeant respectivement des applications notées client appl_1, client appl_2,..., client appl_N, sont reliés au réseau AFDX 220. Les équipements 210 sont des terminaux (*End Systems*) au sens de la norme Arinc 664. Le routeur est adapté à router les messages ACARS via une pluralité de sous-réseaux, notamment les sous-réseaux HF, VHF, SATCOM, voire WiMAX ou Wi-Fi, la liste n'étant pas limitative.

Chacune des applications client appl_1, client appl_2,..., client appl_N, est susceptible d'utiliser le service ACARS. Pour ce faire, elle doit s'enregistrer préalablement auprès du routeur selon une procédure détaillée plus loin. L'ajout d'une nouvelle application ne requiert pas de modification de la configuration matérielle ou logicielle du routeur, de sorte qu'il n'est pas nécessaire de le certifier à nouveau. On notera que cette architecture offre à la fois une grande modularité et une flexibilité d'évolution. Il sera notamment possible de customiser facilement le système de communication ACARS et d'y intégrer des applications propriétaires, tout en conservant le même routeur.

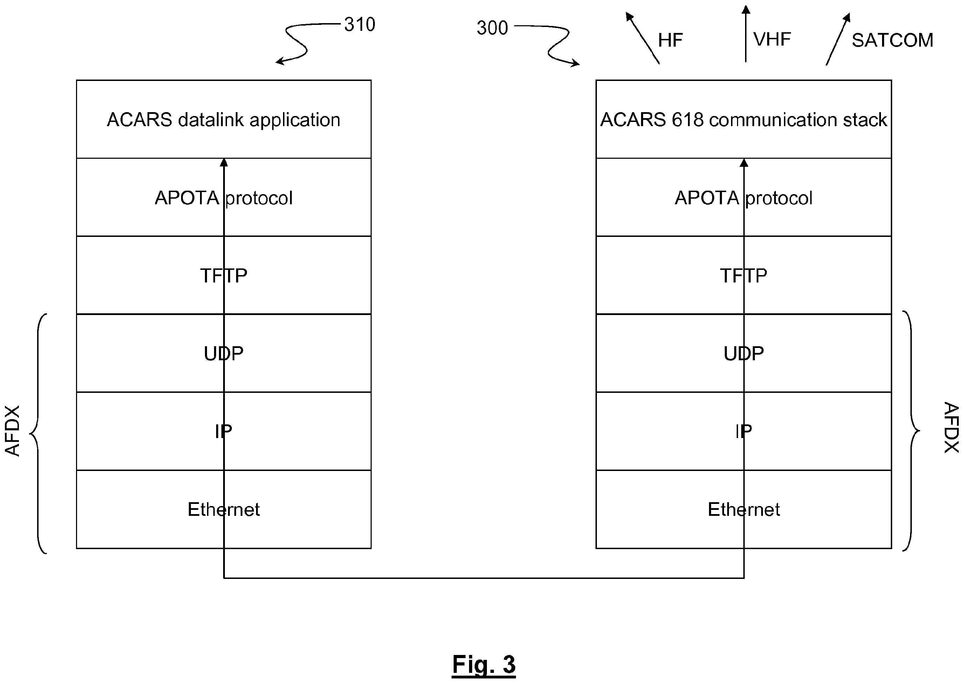

La Fig. 3 représente de manière schématique les piles de protocoles 310 et 300 respectivement mises en oeuvre du côté d'une application cliente et du routeur ACARS.

Les couches basses de protocole de chaque pile sont constituées de celles du réseau AFDX, c'est-à-dire de la couche de liaison Ethernet, de la couche de réseau IP et de la couche de transport UDP.

Du côté de l'application cliente, la couche applicative, notée ici « ACARS datalink application » peut transmettre des messages ACARS au routeur, classiquement au format Arinc 620. Toutefois, à la différence de l'état de la technique où ces messages sont transmis sur des liaisons Arinc 429 en utilisant le protocole de transfert de fichier Arinc 619, ils sont ici transformés par la couche d'adaptation de protocole notée APOTA (ACARS Protocol Over TFTP and AFDX) avant d'être transférés au moyen d'une session TFTP (Trivial File Transfer Protocol). On trouvera une description détaillée du protocole TFTP dans le document RFC 1350 disponible sur le site de l'IETF. On rappellera simplement ici que le protocole TFTP est un protocole très simple de transfert de fichier utilisant UDP comme couche de transport sous-jacente.

Le rôle de la couche APOTA dans la pile de protocole 310 est de fournir un service ACARS (sous la forme de SAP ou *Service Access* Point) à l'application avionique distante, autrement dit de déporter le service ACARS au niveau de cette application. Pour ce faire, la couche de protocole APOTA dialogue avec la couche applicative supérieure grâce à des primitives de service ACARS (*ACARS service primitives*) et avec la couche inférieure avec des primitives de service de transfert de fichier (*FT service primitives*). Elle échange également des paquets, notés APOTA-PDUs (*Protocol Data Units*) avec son homologue dans la pile de protocole 300.

Du côté du routeur, la couche de protocole Arinc 618 gère la communication ACARS avec le sol. De même que précédemment, la couche de protocole APOTA de la pile 300 dialogue avec la couche supérieure grâce à des primitives de services ACARS et avec la couche inférieure grâce à des primitives de service de transfert de fichier. Cependant, à la différence de la pile de protocole 310, la couche de protocole APOTA ne fournit pas de service ACARS à la couche supérieure. Sa principale fonction est d'assurer le transport des messages ACARS par transfert de fichier via la couche TFTP.

Plus généralement, la couche de protocole APOTA assure de manière non limitative les fonctions suivantes :
- déportation du service ACARS du routeur aux applications distantes ;
- enregistrement dynamique des applications distantes, clientes du service ACARS ;
- contrôle de flux sur la liaison descendante ;
- détection des applications clientes défaillantes ;
- détection de la perte du service ACARS ;
- prise en charge des erreurs.

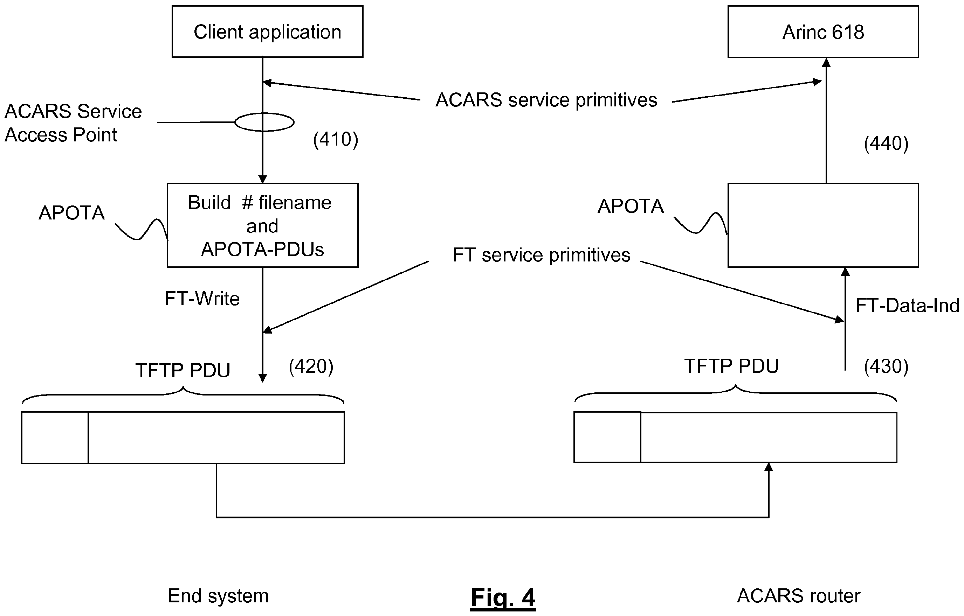

La Fig. 4 illustre schématiquement le mécanisme de déportation du service ACARS pour une liaison descendante (*downlink*), c'est-à-dire air-sol (A/G).

La couche de protocole APOTA encode en 410 des primitives de service ACARS, ainsi que leurs paramètres éventuels, en générant des primitives de transfert de fichier. Le fichier à transférer peut contenir un ou plusieurs paquets APOTA-PDUs. Le nom du fichier, noté ici « #Filename » comprend généralement un code identifiant l'application source, un code identifiant le destinataire (c'est-à-dire le routeur) et un code indiquant le type de message contenu dans le fichier.

La couche de protocole APOTA commande en 420 à la couche TFTP le transfert du fichier contenant les paquets APOTA PDUs au moyen d'une primitive de transfert de fichier notée, FT-Write. La couche TFTP transfère alors le fichier #Filename, sous forme de paquets TFTP PDUS, conformément à la norme RFC 1350. Ces paquets standards sont acheminés au routeur via le réseau AFDX au moyen du protocole de transfert de fichier TFTP. La couche de protocole APOTA de la pile 300 est avertie de la réception du fichier #Filename au moyen de la primitive FT-Data-Ind. Si la couche de protocole APOTA accepte le fichier, elle récupère les paquets APODA-PDUs qu'il contient. A l'étape 440, les messages ACARS sont extraits des paquets APOTA-PDUs et transmis à la couche de protocole Arinc 618. Pour une liaison montante, les couches de protocole APOTA des piles 300 et 310 fonctionnent de manière symétrique.

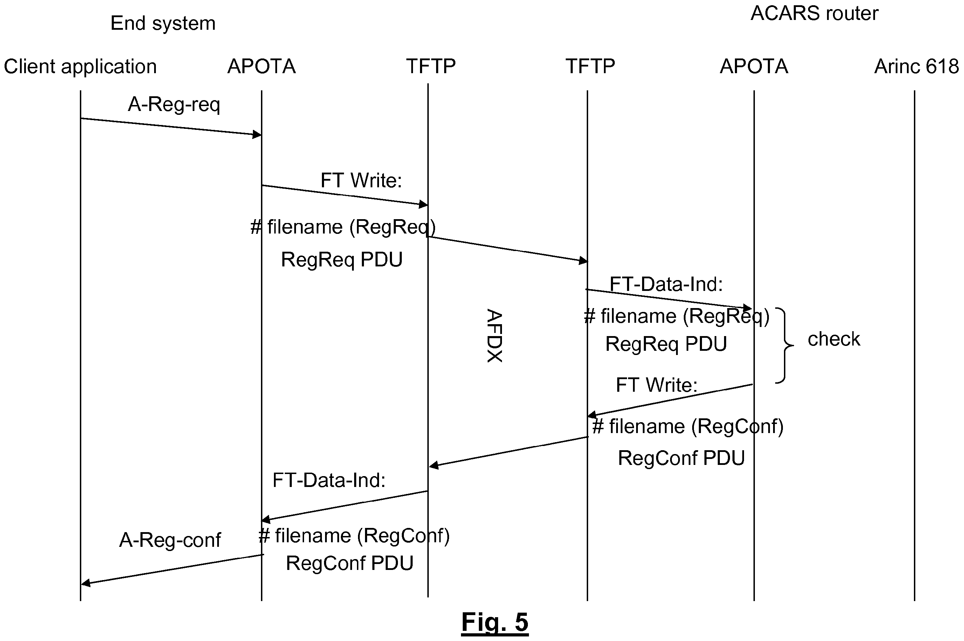

Selon l'invention, l'envoi de messages ACARS par une application distante suppose son enregistrement préalable auprès du routeur, selon une procédure illustrée en Fig. 5. Seules les trois couches supérieures de protocole des piles 300 et 310 ont été ici représentées par souci de simplification.

La procédure est initiée par une requête d'enregistrement de l'application, sous la forme d'une primitive de service ACARS, notée ici A-Reg-req, transmise à la couche de protocole APOTA. Cette primitive permet à l'application distante de se déclarer comme nouveau client au niveau du routeur et d'indiquer quels sont les labels et sous-labels ACARS que l'application souhaite émettre ou recevoir du sol.

La couche de protocole APOTA génère alors une primitive de service de transfert de fichier (FT-Write) ayant pour paramètres un nom de fichier #Filename(RegReq), un paquet APOTA PDU noté ici RefReq PDU et un numéro de port TFTP (non représenté) . Le nom de fichier comprend le type de message transmis, dans le cas présent une requête d'enregistrement, ainsi que le code identifiant de l'application source.

A la réception par le routeur, la couche TFTP transmet le nom du fichier #Filename(RegReq) reçu et le paquet RegReq PDU. Le paquet RegReq contient entre autres la liste des labels et sous-labels ACARS que l'application souhaite réserver.

La couche APOTA du routeur vérifie si la requête d'enregistrement est correcte sur la base des informations contenues dans le nom du fichier et/ou le paquet transporté RegReq PDU. Dans l'affirmative, le routeur enregistre localement le code de l'application en question avant de retourner un message de confirmation d'enregistrement. En revanche, si la requête d'enregistrement échoue, le routeur renvoie un message d'échec d'enregistrement. L'envoi du message de confirmation ou d'échec d'enregistrement est effectué comme précédemment au moyen d'une primitive de service de transfert de fichier (FT-Write). Dans le cas présent, l'enregistrement est confirmé et la couche APOTA génère ladite primitive avec pour paramètres le nom de fichier #Filename(RegConf)et le paquet RegConf PDU.

A la réception par le terminal, le message de confirmation est traité par la couche APOTA et la confirmation est transmise à l'application cliente au moyen d'une primitive de service ACARS notée A-Regconf.

La couche de protocole APOTA a également pour fonction le contrôle de flux sur la liaison descendante. Ce contrôle de flux est avantageusement prévu du fait de la disparité de débit entre le réseau AFDX (100 Mb/s) et les sous réseaux VHF/HF/SATCOM (moins de 31 Kb/s), entraînant un risque élevé de congestion au niveau du routeur. On notera qu'a *contrario* aucun mécanisme de contrôle de flux n'est nécessaire sur la liaison montante.

Après avoir procédé à son enregistrement auprès du routeur, une application distante peut envoyer des messages ACARS. Pour ce faire, une primitive de service de transfert de fichier (FT-Write) est transmise par la couche APOTA de l'application distante à celle du routeur. Cette primitive a pour paramètres un nom de fichier comprenant notamment le code de l'application distante, le type de message (liaison montante ou descendante), et la taille du message.

Lorsque la couche APOTA du routeur reçoit cette requête, elle vérifie tout d'abord que l'application distante est effectivement connue et enregistrée. A défaut, la requête est rejetée et le transfert de fichier interrompu. Elle vérifie ensuite le type de message, pour déterminer si elle doit effectuer un contrôle de flux. Dans l'affirmative (liaison descendante), elle vérifie si la taille du message est inférieure à la place disponible dans son buffer de réception. Si c'est bien le cas, le transfert TFTP est accepté par le routeur. Sinon, il est rejeté et la couche APOTA du routeur le signifie à la couche APOTA de l'application distante au moyen d'une primitive de service indiquant ce rejet. La couche APOTA de l'application distante cesse alors de transmettre de nouvelles requêtes.

Lorsque le buffer de réception du routeur ACARS se libère, soit parce qu'un message qui y était stocké a été transmis au sol avec succès, soit parce que le routeur a reçu une commande de purge d'un message, il le signale à la couche APOTA de l'application distante au moyen de primitives de service indiquant respectivement une confirmation de transmission au sol et une purge de message. Sur réception de l'une ou l'autre de ces primitives, la couche APOTA de l'application distante est autorisée à transmettre de nouvelles requêtes.

Avantageusement, le nom de fichier en argument de la primitive de service de transfert de fichier (FT-Write) peut également comprendre une indication de priorité et/ou une indication de stratégie de routage. Ces indications permettent au routeur d'une part de hiérarchiser les flux incidents et d'autre part de sélectionner pour chaque message incident le média HF/VHF/SATCOM le plus approprié en fonction de leurs degrés respectifs de disponibilité.

La couche de protocole APOTA permet aussi de détecter les applications clientes défaillantes. Une application distante est défaillante si elle n'est plus capable de traiter les messages qui lui sont transmis sur la liaison montante.

Afin de détecter une telle défaillance, la couche de protocole APOTA du routeur envoie périodiquement un message de test (noté ici « Testlink ») à chacune des applications enregistrées. A chaque envoi un temporisateur est réarmé à une valeur (*Tₜₑₛₜ*) et, lorsque le temporisateur arrive à échéance, un nouveau message de test est envoyé. Si le transfert du message échoue pour l'une des applications, c'est-à-dire si le routeur ne reçoit pas de cette application un accusé de réception avant l'arrivée à échéance dudit temporisateur, celle-ci est considérée comme défaillante. Ce mécanisme de détection permet au routeur de découvrir le plus rapidement possible qu'une application distante n'est plus disponible et par suite de rejeter les messages en provenance du sol qui lui seraient destinés.

Réciproquement, une application distante peut détecter la perte du service ACARS, par exemple en cas de problème sur le réseau AFDX. Pour ce faire, l'application distante arme un temporisateur à une valeur *Tₘₒₙ>Tₜₑₛₜ* lors de son enregistrement auprès du routeur. Le temporisateur est ensuite réarmé à chaque réception d'un message de test (Testlink) à la valeur *Tₘₒₙ.* Si le temporisateur arrive à échéance, l'application en conclut à l'absence d'un message de test et à la perte du service ACARS.

La couche de protocole APOTA permet enfin de prendre en charge les erreurs pouvant intervenir dans le service ACARS. Plus précisément lorsqu'une erreur est détectée, par exemple parce qu'un transfert de fichier a échoué, un message reçu n'est pas correctement formaté, le nom d'un fichier en argument d'une requête de transfert est erroné ou encore un message n'est pas autorisé dans l'état courant de la couche de protocole, cette erreur est gérée de la manière suivante :
Lorsqu'une erreur affectant un message issu de l'application distante est détectée par le routeur, l'application est simplement « désenregistrée » du service ACARS. Plus précisément, son enregistrement est annulé en supprimant le code de l'application de la liste des applications enregistrées. L'application en est avertie par un message et doit se réenregistrer pour pouvoir accéder de nouveau au service ACARS.

De la même façon, si une erreur affectant un message du routeur est détectée, l'application est « désenregistrée » du service ACARS et en est avertie par un message. Cependant, à la différence du cas précédent, son code n'est pas supprimé de la liste des applications gérée par le routeur. Son statut passe simplement d' « enregistrée » à « déconnectée », ce qui permet au routeur de continuer à envoyer au sol des messages de cette application qui seraient encore en instance de transmission dans le buffer.

## Revendications

1. Système de communication de messages du type Aircraft Communications Addressing and Reporting System, ACARS comprenant au moins un équipement embarqué hébergeant une application adaptée à transmettre et/ou recevoir des messages ACARS, un routeur adapté à router lesdits messages vers ou en provenance d'une pluralité de sous-réseaux (HF/VHF/SATCOM), **caractérisé en ce que** :
- ledit équipement et ledit routeur sont reliés à un réseau du type Avionics Full-Duplex Switched Ethernet, AFDX et que ladite application est adaptée à s'enregistrer dynamiquement auprès du routeur, via ledit réseau, le routeur ne routant lesdits messages que si ladite application est effectivement enregistrée auprès de lui
- ladite application s'enregistre auprès du routeur en lui transmettant une requête d'enregistrement et en recevant en retour une confirmation d'enregistrement ;
- la requête d'enregistrement et la confirmation d'enregistrement éventuelle sont transmises au moyen d'une pile de protocole APOTA sur Trivial File Transfer Protocol / User Datagram Protocol / Internet Protocol, APOTA/TFTP/UDP/IP où APOTA désigne une couche d'adaptation de protocole entre une couche TFTP et l'application, du côté de l'équipement, et une couche d'adaptation de protocole entre une couche Arinc 618 et une couche TFTP, du côté du routeur.

2. Système de communication selon la revendication 1, **caractérisé en ce que** ladite application ne reçoit en retour une confirmation d'enregistrement que si les informations contenues dans la requête sont déterminées comme étant valides par ce dernier.

3. Système de communication selon l'une des revendications précédentes, **caractérisé en ce que** le routeur est adapté à effectuer un contrôle de flux sur les messages ACARS en provenance de ladite application et à destination de l'un desdits sous-réseaux.

4. Système de communication selon la revendication 3, **caractérisé en ce que** le routeur contrôle le flux des messages ACARS en provenance de ladite application, en comparant la taille de chaque message avec la place disponible dans un buffer de réception et en renvoyant à ladite application un message de rejet si la place disponible est inférieure à la taille dudit message.

5. Système de communication selon l'une des revendications précédentes, **caractérisé en ce que** le routeur envoie périodiquement à ladite application un message de test, un premier temporisateur étant réarmé à une première valeur déterminée (*Tₜₑₛₜ*) à chaque envoi et un message de test étant envoyé à chaque fois qu'il arrive à échéance, une défaillance de ladite application étant détectée si le routeur ne reçoit pas un accusé de réception du message de test avant l'arrivée à échéance dudit premier temporisateur.

6. Système de communication selon la revendication 5, **caractérisé en ce que** ladite application arme un second temporisateur à une seconde valeur (*Tₘₒₙ*) supérieure à ladite première valeur, lors de son enregistrement auprès du routeur et à chaque réception d'un message de test, une défaillance du routeur étant détectée si ledit second temporisateur arrive à échéance avant la réception d'un message de test.

7. Système de communication selon une des revendications précédentes, **caractérisé en ce que** si le routeur détecte une erreur affectant un message issu d'une application enregistrée, il annule son enregistrement en supprimant un code identifiant ladite application de la liste des applications enregistrées.

8. Système de communication selon une des revendications précédentes, **caractérisé en ce que** si ladite application détecte une erreur affectant un message issu du routeur, elle annule son enregistrement, les messages de ladite application encore en instance de transmission dans le routeur étant cependant routés vers l'un desdits sous-réseaux.

9. Aéronef **caractérisé en ce qu'**il comprend un système de communication selon l'une des revendications précédentes.

## Patentansprüche

1. Nachrichtenkommunikationssystem von der Art Aircraft Communications Addressing and Reporting System, ACARS, das mindestens eine bordseitige Ausrüstung, in der eine Anwendung untergebracht ist, die geeignet ist, ACARS-Nachrichten zu übertragen und/oder zu empfangen, und einen Router enthält, der geeignet ist, die Nachrichten zu oder von einer Vielzahl von Teilnetzwerken (HF/VHF/SATCOM) zu routen, **dadurch gekennzeichnet, dass**:
- die Ausrüstung und der Router mit einem Netzwerk der Art Avionics Full-Duplex Switched Ethernet, AFDX, verbunden sind, und dass die Anwendung geeignet ist, sich dynamisch beim Router über das Netzwerk zu registrieren, wobei der Router die Nachrichten nur routet, wenn die Anwendung tatsächlich bei ihm registriert ist,
- die Anwendung sich beim Router registriert, indem sie eine Registrieranforderung an ihn überträgt und eine Registrierbestätigung zurück erhält;
- die Registrieranforderung und die mögliche Registrierbestätigung mittels eines Protokollstapels APOTA auf Trivial File Transfer Protocol / User Datagram Protocol / Internet Protocol, APOTA/TFTP/UDP/IP, übertragen werden, wobei APOTA eine Protokollanpassungsschicht zwischen einer TFTP-Schicht und der Anwendung auf der Seite der Ausrüstung und eine Protokollanpassungsschicht zwischen einer Arinc-618-Schicht und einer TFTP-Schicht auf der Seite des Routers bezeichnet.

2. Kommunikationssystem nach Anspruch 1, **dadurch gekennzeichnet, dass** die Anwendung nur dann eine Registrierbestätigung zurückerhält, wenn die in der Anforderung enthaltenen Informationen von letzterem als gültig festgelegt werden.

3. Kommunikationssystem nach einem der vorhergehenden Ansprüche, **dadurch gekennzeichnet, dass** der Router geeignet ist, eine Flusskontrolle an den ACARS-Nachrichten auszuführen, die von der Anwendung kommen und für eines der Teilnetzwerke bestimmt sind.

4. Kommunikationssystem nach Anspruch 3, **dadurch gekennzeichnet, dass** der Router den Fluss der von der Anwendung kommenden ACARS-Nachrichten kontrolliert, indem er die Größe jeder Nachricht mit dem in einem Empfangsbuffer verfügbaren Platz vergleicht und indem er eine Zurückweisungsnachricht an die Anwendung schickt, wenn der verfügbare Platz kleiner als die Größe der Nachricht ist.

5. Kommunikationssystem nach einem der vorhergehenden Ansprüche, **dadurch gekennzeichnet, dass** der Router periodisch eine Testnachricht an die Anwendung schickt, wobei ein erster Timer bei jedem Sendevorgang auf einen ersten festgelegten Wert (Tₜₑₛₜ) zurückgestellt wird, und eine Testnachricht jedes Mal geschickt wird, wenn er abläuft, wobei ein Ausfall der Anwendung erfasst wird, wenn der Router keine Empfangsbestätigung der Testnachricht vor dem Ablauf des ersten Timers empfängt.

6. Kommunikationssystem nach Anspruch 5, **dadurch gekennzeichnet, dass** die Anwendung bei ihrer Registrierung beim Router und bei jedem Empfang einer Testnachricht einen zweiten Timer auf einen zweiten Wert (Tₘₒₙ) höher als der erste Wert einstellt, wobei ein Ausfall des Routers erfasst wird, wenn der zweite Timer vor dem Empfang einer Testnachricht abläuft.

7. Kommunikationssystem nach einem der vorhergehenden Ansprüche, **dadurch gekennzeichnet, dass** der Router, wenn er einen Fehler erfasst, der eine von einer registrierten Anwendung stammende Nachricht betrifft, seine Registrierung storniert, indem er einen die Anwendung identifizierenden Code aus der Liste der registrierten Anwendungen löscht.

8. Kommunikationssystem nach einem der vorhergehenden Ansprüche, **dadurch gekennzeichnet, dass** die Anwendung, wenn sie einen Fehler erfasst, der eine vom Router stammende Nachricht betrifft, ihre Registrierung storniert, wobei die noch im Router im Übertragungszustand befindlichen Nachrichten der Anwendung aber zu einem der Teilnetzwerke geroutet werden.

9. Luftfahrzeug, **dadurch gekennzeichnet, dass** es ein Kommunikationssystem nach einem der vorhergehenden Ansprüche enthält.

## Claims

1. A message communications system of the type Aircraft Communications Addressing and Reporting System, ACARS, comprising at least one on-board piece of equipment harbouring an application adapted for transmitting and/or receiving ACARS messages, a router adapted for routing said messages towards or from a plurality of sub-networks (HF/VHF/SATCOM), **characterized in that**:
said equipment and said router are connected to a network of the type Avionics Full-Duplex Switched Ethernet, AFDX, and that said application is adapted for dynamic registration at the router, via said network, the router only routing said messages if said application is actually registered thereat;
said application registers at said router by transmitting thereto a registration request and by receiving therefrom a registration confirmation;
the registration request and the possible registration confirmation are transmitted by means of a protocol stack APOTA on Trivial File Transfer Protocol/ User Datagram Protocol/Internet Protocol, APOTA/TFTP/UDP/IP, wherein APOTA designates a protocol adaptation layer between a TFTP layer and the application, on the side of the equipment, and a protocol adaptation layer between an Arinc 618 layer and a TFTP layer, on the router side.

2. The communications system according to claim 1, **characterized in that** said application only receives in return a registration confirmation if the information contained in the request is determined as being valid by the latter.

3. The communications system according to any of the preceding claims, **characterized in that** the router is adapted for carrying out flow control on the ACARS messages from said application and to one of said sub-networks.

4. The communications system according to claim 3, **characterized in that** the router controls the flow of ACARS messages from said application, by comparing the size of each message with the space available in a reception buffer and by sending back to said application a rejection message if the available space is smaller than the size of said message.

5. The communications system according to any of the preceding claims, **characterized in that** the router periodically sends to said application a test message, a first timer being reloaded with a first determined value (*Tₜₑₛₜ*) at each sending and a test message being sent every time it times out, a fault of said application being detected if the router does not receive an acknowledgment of receipt of the test message before the timeout of said first timer.

6. The communications system according to claim 5, **characterized in that** said application loads a second timer with a second value (*Tₘₒₙ*) greater than said first value, upon its registration at the router and at each reception of a test message, a fault of the router being detected if said second timer times out before receiving a test message.

7. The communications system according to any of the preceding claims, **characterized in that**, if the router detects an error affecting a message from a registered application, it cancels its registration by deleting a code identifying said application from the list of the registered applications.

8. The communications system according to any of the preceding claims, **characterized in that** if said application detects an error affecting a message from the router, it cancels its registration, the messages of said application still pending for transmission in the router being however routed towards one of said sub-networks.

9. An aircraft **characterized in that** it comprises a communications system according to any of the preceding claims.
